# EUROPÄISCHE PATENTSCHRIFT

(11) **EP 1 025 177 B1**
(45) Veröffentlichungstag und Bekanntmachung des Hinweises auf die Patenterteilung: **23.05.2001**
(21) Anmeldenummer: 98949815.9
(22) Anmeldetag: 21.10.1998
(51) Int. Cl.: C09J 101/02, A22C 13/00

(54) **VERFAHREN ZUM VERBINDEN VON GEGENSTÄNDEN, DIE EINE OBERFLÄCHE AUS EINEM CELLULOSISCHEN MATERIAL AUFWEISEN**
METHOD FOR JOINING OBJECTS WHICH HAVE A SURFACE CONSISTING OF A CELLULOSIC MATERIAL
PROCEDE D'ASSEMBLAGE D'OBJETS PRESENTANT UNE SURFACE CONSTITUEE D'UN MATERIAU CELLULOSIQUE

(30) Priorität: 23.10.1997 AT 179997
(43) Veröffentlichungstag der Anmeldung: 09.08.2000
(73) Patentinhaber: LENZING AKTIENGESELLSCHAFT, 4860 Lenzing (AT)
(72) Erfinder: SCHLOSSNIKL, Christian, A-4840 Vöcklabruck (AT); GSPALTL, Peter, A-8071 Grambach (AT); RIEDL, Gerold, A-4870 Pfaffing (AT); SCHWEIGART, Andreas, A-4880 St. Georgen (AT)
(74) Vertreter: Schwarz, Albin, Dr.
(86) Internationale Anmeldenummer: AT9800252
(87) Internationale Veröffentlichungsnummer: WO9921931

(56) Entgegenhaltungen:
- WO-A-96/37653
- WO-A-98/11288
- CH-A- 223 307
- CHEMICAL ABSTRACTS, vol. 123, no. 16, 16. Oktober 1995 Columbus, Ohio, US; abstract no. 202647, "Sulfur -free impregnating compositions for improving wet strength and alkali resistance of cellulosic fibrous food casings" XP002090305 & JP 07 189180 A (SHINOJI SEISHI KK) 25. Juli 1995

## Beschreibung

Die vorliegende Erfindung betrifft ein Verfahren zum Verbinden von Gegenständen, die je eine Oberfläche aus einem cellulosischen Material aufweisen, wobei ein Verbindungsmittel auf mindestens eine der Oberflächen aus cellulosischem Material aufgebracht wird und die Oberflächen aus cellulosischem Material miteinander in Kontakt gebracht werden.

Ein Verfahren dieser Art ist beispielsweise aus der JP-A-8-253737 bekannt. Gemäß diesem bekannten Verfahren werden cellulosische Materialien mittels einer Lösung einer metallorganischen Verbindung miteinander verbunden. Nachteilig ist hierbei, daß eine Verbindung entsteht, die aus einem anderen Material als Cellulose ist, wodurch das Aussehen der Verbindung im Vergleich zum cellulosischen Material verändert wird und die Festigkeit der Verbindung gemindert wird. Dies ist beispielsweise bei der Verwendung cellulosischer Folien als Verpackungsmaterial für Lebensmittel, etwa als Wursthaut, unerwünscht. Weiters sind eine Reihe metallorganischer Verbindungen bei Verwendung der cellulosischen Folien als Verpackungsmaterial für Lebensmittel ungeeignet, da sie giftig sind.

Die vorliegende Erfindung setzt sich zum Ziel, die oben beschriebenen Nachteile und Schwierigkeiten zu überwinden und ein Verfahren zum Verbinden von Gegenständen, die eine Oberfläche aus einem cellulosischen Material aufweisen, zu schaffen, bei welchem eine Verbindung entsteht, deren Aussehen im Vergleich zum cellulosischen Material unverändert ist und bei dem eine hohe Festigkeit der Verbindung erreicht wird.

Diese Aufgabe wird bei einem Verfahren zum Verbinden von Gegenständen, die je eine Oberfläche aus einem cellulosischen Material aufweisen, wobei ein Verbindungsmittel auf mindestens eine der Oberflächen aus cellulosischem Material aufgebracht wird und die Oberflächen aus cellulosischem Material miteinander in Kontakt gebracht werden, dadurch gelöst, daß als Verbindungsmittel eine Lösung von Cellulose in einem wässerigen tertiären Aminoxid, insbesondere N-Methylmorpholin-N-oxid (NMMO), eingesetzt wird. Die Herstellung dieser Lösung wird nach den Methoden durchgeführt, mit denen üblicherweise Spinnlösungen hergestellt werde, d.h. zum Beispiel bei Temperaturen von etwa 80°C bis 140°C. Der Anteil der Cellulose kann hierbei in einem Bereich von 1 bis 20%, vorzugsweise 1 bis 10%, variiert werden.

Die Dicke der Verbindungsstelle läßt sich in großem Maße zunächst durch die Menge der aufgebrachten Lösung steuern. Weitere Möglichkeiten sind die Einstellung entsprechender Konzentrationen an Cellulose in der Lösung, sowie der Anpreßdruck bei einer Verbindung unter Druck.

Um eine nachteilige Auflösung der cellulosischen Oberflächen durch das Lösungsmittel, in welchem die Cellulose gelöst ist, zu vermeiden, sollte die Kontaktzeit der Oberflächen mit der Verbindungslösung in Abhängigkeit von der Dicke der Oberflächen zwischen 1 und 60 Sekunden liegen.

Hierdurch gelingt es, eine Verbindung zwischen Gegenständen, die eine Oberfläche aus einem cellulosischen Material aufweisen, zu schaffen, die ebenfalls aus cellulosischem Material ist und eine sehr hohe Festigkeit aufweist. Ein weiterer Vorteil des erfindungsgemäßen Verfahrens liegt darin, daß sich die hierdurch geschaffene Verbindung in weiteren Behandlungsschritten genau so wie das cellulosische Material verhält.

Aus der WO-96/37653 ist ein Verfahren zum Beschichten, Imprägnieren oder Umhüllen von Formkörpern, wie Fasern, Fäden, Garnen, Geweben, Vliesen, Gewirken, Gelegen, Filmen, Folien, Membranen, Papier u. dgl., beispielsweise von cellulosischen Formkörpern, mittels einer Lösung von Cellulose in einem tertiären Aminoxid, insbesondere NMMO, beschrieben. Hierdurch werden den Formkörpern bestimmte Eigenschaften verliehen, beispielsweise wird die Wasserdurchlässigkeit und die Wasserdampfdurchlässigkeit beeinflußt. Das Verbinden cellulosischer Formkörper ist in diesem Dokument nicht beschrieben.

Die Erfindung betrifft auch die Verwendung einer Lösung von Cellulose in einem wässerigen tertiären Aminoxid, insbesondere N-Methylmorpholin-N-oxid (NMMO), als Verbindungsmittel für Gegenstände, die eine Oberfläche aus einem cellulosischen Material aufweisen.

Gemäß einer bevorzugten Ausführungsform des erfindungsgemäßen Verfahrens werden als Gegenstände, die eine Oberfläche aus einem cellulosischen Material aufweisen, cellulosische Folien eingesetzt, wobei die cellulosischen Folien zumindest teilweise überlappend angeordnet und im Überlappungsbereich miteinander verbunden werden.

Gemäß einer weiters bevorzugten Ausführungsform werden die Gegenstände, die eine Oberfläche aus einem cellulosischen Material aufweisen, unter Druck miteinander verbunden.

Vorzugsweise enthält die Lösung von Cellulose in einem wässerigen tertiären Aminoxid zusätzliche Wirkstoffe, wie Aromastoffe oder Farbstoffe, wie sie zum Beispiel bei der Herstellung von Wursthäuten üblich sind.

Eine weitere bevorzugte Ausgestaltungsform des erfindungsgemäßen Verfahrens ist dadurch gekennzeichnet, daß als Gegenstände, die eine Oberfläche aus einem cellulosischen Material aufweisen, cellulosische Flachfolien eingesetzt werden, wobei die Flachfolien so angeordnet und miteinander verbunden werden, daß eine Schlauchfolie gebildet wird. Auf diese Art und Weise können insbesondere Umhüllungen für Fleisch- und Wurstwaren hergestellt werden.

Derzeit werden Wursthäute mittels Schlauchfolien/Blasfolienextrusion hergestellt. Dabei wird ein Schlauch extrudiert und in dieser Form gefällt, getrocknet, beschichtet, bedruckt, mit Additiven versehen usw. Diese Verfahrensschritte können entweder alle oder nur zum Teil durchgeführt werden. Die Reihenfolge der Verfahrensschritte kann variieren. Da während des gesamten Verfahrens ein Schlauch geführt werden muß, ist das Verfahren sehr aufwendig. Wird die Wursthaut mittels des Viskoseverfahrens hergestellt, kommt es weiters noch zu Ausgasungen im Inneren des Schlauches, wodurch Produktionsunterbrechungen notwendig werden.

Mit Hilfe des erfindungsgemäßen Verfahrens werden alle diese Nachteile bei der Herstellung von Wursthäuten überwunden. Nach dem Verbinden der cellulosischen Flachfolien wird die hierbei gebildete schlauchförmige Struktur mit Wasser gewaschen und kann mittels normaler Prozeßschritte weiterverarbeitet werden. Es können weitere Schichten und/oder Drucke auf die Wursthaut aufgebracht werden. Diese Schritte können auch vor dem Verbinden durchgeführt werden, die aufgebrachten Materialien müssen nur wasserfest sein. Das Aufbringen vor dem Verbinden läßt eine wesentliche Vereinfachung des gesamten Herstellungsprozesses zu.

## Patentansprüche

1. Verfahren zum Verbinden von Gegenständen, die je eine Oberfläche aus einem cellulosischen Material aufweisen, wobei ein Verbindungsmittel auf mindestens eine der Oberflächen aus cellulosischem Material aufgebracht wird und die Oberflächen aus cellulosischem Material miteinander in Kontakt gebracht werden,
dadurch gekennzeichnet,
daß als Verbindungsmittel eine Lösung von Cellulose in einem wässerigen tertiären Aminoxid, insbesondere N-Methylmorpholin-N-oxid (NMMO), eingesetzt wird.

2. Verfahren nach Anspruch 1, dadurch gekennzeichnet, daß als Gegenstände, die eine Oberfläche aus einem cellulosischen Material aufweisen, cellulosische Folien eingesetzt werden, wobei die cellulosischen Folien zumindest teilweise überlappend angeordnet und im Überlappungsbereich miteinander verbunden werden.

3. Verfahren nach Anspruch 1 oder 2, dadurch gekennzeichnet, daß die Gegenstände, die eine Oberfläche aus einem cellulosischen Material aufweisen, unter Druck miteinander verbunden werden.

4. Verfahren nach einem der Ansprüche 1 bis 3, dadurch gekennzeichnet, daß die Lösung von Cellulose in einem wässerigen tertiären Aminoxid zusätzliche Wirkstoffe enthält.

5. Verfahren nach einem der Ansprüche 1 bis 4, dadurch gekennzeichnet, daß als Gegenstände, die eine Oberfläche aus einem cellulosischen Material aufweisen, cellulosische Flachfolien eingesetzt werden, wobei die Flachfolien so angeordnet und miteinander verbunden werden, daß eine Schlauchfolie gebildet wird.

6. Verwendung einer Lösung von Cellulose in einem wässerigen tertiären Aminoxid, insbesondere N-Methylmorpholin-N-oxid (NMMO), als Verbindungsmittel für Gegenstände, die eine Oberfläche aus einem cellulosischen Material aufweisen.

7. Verwendung einer gemäß Anspruch 5 hergestellten Schlauchfolie als Lebensmittelverpackung, insbesondere als Umhüllung für Fleisch- und Wurstwaren.

## Claims

1. A method for connecting articles each having a surface made of a cellulose material, wherein a connecting means is applied onto at least one of the surfaces of cellulose material and the surfaces of cellulose material are contacted with one another, characterized in that a solution of cellulose in an aqueous tertiary amine oxide, in particular N-methylmorpholine-N-oxide (NMMO), is used as said connecting means.

2. A method according to claim 1, characterized in that cellulose films are used as said articles having surfaces of cellulose material, wherein the cellulose films are arranged in an at least partially overlapping manner and are interconnected in the overlapping regions.

3. A method according to claim 1 or 2, characterized in that the articles having surfaces of cellulose material are interconnected under pressure.

4. A method according to any one of claims 1 to 3, characterized in that the solution of cellulose in an aqueous tertiary amine oxide contains additional active ingredients.

5. A method according to any one of claims 1 to 4, characterized in that cellulose flat films are used as said articles having surfaces of cellulose material, wherein the flat films are arranged and interconnected in a manner so as to form tubular films.

6. The use of a solution of cellulose in an aqueous tertiary amine oxide, in particular N-methylmorpholine-N-oxide (NMMO), as a connecting means for articles having surfaces of cellulose material.

7. The use of a tubular film produced according to claim 5, as a food packaging, in particular as a wrapping for meats and sausages.

## Revendications

1. Procédé de liaison d'objets qui présentent chacun une surface en une matière cellulosique, dans lequel on dépose un agent de liaison sur au moins une des surfaces en matière cellulosique et on met en contact les unes avec les autres les surfaces en matière cellulosique, caractérisé en ce qu'on utilise comme agent de liaison une solution de cellulose dans un oxyde d'amine tertiaire aqueux, en particulier le N-méthylmorpholine-N-oxyde (NMMO).

2. Procédé selon la revendication 1, caractérisé en ce qu'on utilise comme objets qui présentent une surface en matière cellulosique des feuilles cellulosiques, les feuilles cellulosiques étant placées au moins en partie en recouvrement et étant liées les unes avec les autres dans le domaine de recouvrement.

3. Procédé selon la revendication 1 ou 2, caractérisé en ce que les objets qui présentent une surface en matière cellulosique sont liés les uns avec les autres sous pression.

4. Procédé selon l'une des revendications 1 à 3, caractérisé en ce que la solution de cellulose contient un composé additionnel dans un oxyde d'amine tertiaire aqueux.

5. Procédé selon l'une des revendications 1 à 4, caractérisé en ce qu'on utilise comme objets qui présentent une surface en matière cellulosique, des feuilles planes cellulosiques, les feuilles planes étant placées et liées les unes avec les autres de manière à former une feuille en gaine.

6. Utilisation d'une solution de cellulose dans un oxyde d'amine tertiaire aqueux, en particulier le N-méthylmorpholine-N-oxyde (NMMO), comme agent de liaison pour des objets qui présentent une surface en matière cellulosique.

7. Utilisation d'une feuille en gaine fabriquée selon la revendication 5 comme emballage d'aliment, en particulier comme enveloppe pour la viande et les saucisses.
